# EUROPÄISCHE PATENTSCHRIFT

(11) **EP 0 418 711 B1**
(45) Veröffentlichungstag und Bekanntmachung des Hinweises auf die Patenterteilung: **14.02.1996**
(21) Anmeldenummer: 90117539.8
(22) Anmeldetag: 12.09.1990
(51) Int. Cl.: G10L 5/06

(54) **Verfahren zur sprecheradaptiven Erkennung von Sprache**
Method for speaker-adaptive speech recognition
Procédé de reconnaissance de la parole adaptable au locuteur

(30) Priorität: 22.09.1989 DE 3931638
(43) Veröffentlichungstag der Anmeldung: 27.03.1991
(73) Patentinhaber: Alcatel SEL Aktiengesellschaft, D-70435 Stuttgart (DE); ALCATEL N.V., NL-1077 XX Amsterdam (NL)
(72) Erfinder: Hackbarth, Heidi, Dr., D-7015 Korntal (DE); Immendörfer, Manfred, Dr., D-7257 Ditzingen (DE)
(74) Vertreter: Pohl, Herbert, Dipl.-Ing

(56) Entgegenhaltungen:
- US-A- 4 866 778
- EUROPEAN CONFERENCE ON SPEECH COMMUNICATION AND TECHNOLOGY, EUROSPEECH'89, Paris, 26. - 28. September 1989, Band I, Seiten 75-78; P. FESSELER et al.: "Automatic vocabulary extension for a speaker-adaptive speech recognition system based on CVC units"
- IT/INFORMATIONSTECHNIK, Band 28, Nr. 4, 1986, Seiten 227-235, München, DE; G. RUSKE et al.: "Automatische Erkennung fliessender Sprache auf der Basis von Halbsilben"
- ICASSP'84, INTERNATIONAL CONFERENCE ON ACOUSTICS, SPEECH, AND SIGNAL PROCESSING, San Diego, CA, 19. - 21. März 1984, Seiten 35.2.1-4; A.M. COLLA et al.: "Automatic diphone bootstrapping for speaker-adaptive continuous speech recognition"
- SIGNAL PROCESSING, Band 14, Nr. 4, Juni 1988, Seiten 388-389; H.-Y. SU: "Acoustic-phonetic recognition of continuous speech using vector quantization; Adaption of the dictionary to the speaker"
- ICASSP'86, INTERNATIONAL CONFERENCE ON ACOUSTICS, SPEECH, AND SIGNAL PROCESSING, Tokyo, 7. - 11. April 1986, Seiten 1121-1124; F. TOGAWA et al.: "Voice-activated word processor with automatic learning for dynamic optimization of syllable-templates"
- ICASSP'85, INTERNATIONAL CONFERENCE ON ACOUSTICS, SPEECH, AND SIGNAL PROCESSING, Tampa, Florida, 26. - 29. März 1985, Seiten 862-865; H. LAGGER et al.: "A coarse phonetic knowledge source for template independent large vocabulary word recognition"

## Beschreibung

Die Erfindung betrifft ein Verfahren zur sprecheradaptiven Erkennung von Sprache. Ein leistungsfähiges Spracherkennungsverfahren hat unter anderem folgende Anforderungen zu erfüllen: Es müssen sowohl isolierte Wörter als auch ein fließender Redetext erkannt werden. Auch bei sehr großen Wortschätzen sollte die Erkennung möglichst in Echtzeit stattfinden. Es ist eine schnelle Adaption an einen neuen Sprecher erforderlich. Eine beliebige Generierung von Referenz-Wörtern und Erweiterung des Wortschatzes soll ohne (gar mehrfaches) Vorsprechen der hinzugefügten Wörter möglich sein. Aussprachevarianten einzelner Wörter müssen automatisch generiert werden können, und zwar ohne explizites Vorsprechen dieser Varianten. Bei fließender Rede soll eine Analyse sich überlappender Worthypothesen die gesprochene Phrase erkennen lassen.

Aus dem Stand der Technik ist ein Verfahren zur automatischen Erkennung fließender Sprache auf der Basis von Halbsilben bekannt. Hierbei wird kontinuierlich gesprochene Sprache in Segmente aufgeteilt. In der Vorverarbeitung der Sprache werden Sprachlaute vor allem anhand ihrer spektralen Zusammensetzung unterschieden. Im speziellen wird die spektrale Vorverarbeitung in einem Lautheitsmodell vereinigt.

In der silbenorientierten Spracherkennung an sich, werden in einem ersten Schritt Vokale in Sprachsignal lokalisiert, dann werden zwei verschiedenen Klassifikatoren vorgelegt und in Form von der sogenannten Lautschrift von der Klassifikation ausgegeben. Das Ergebnis stellt lediglich eine Schätzung für die richtige Lautschrift dar. Im weiteren Verahren findet ein Vergleich mit allen zugelassenen Worten in einem Lexikon statt. Zur direkten Worterkennung werden Wahrscheinlichkeiten berechnet (IT/Informationstechnik, Band 28, Nr. 4, 1986, Seiten 227 bis 233, München, G. Ruske et al: "Automatische Erkennung fließender Sprache auf der Basis von Halbsilben").

Die bekannten Verfahren zur Spracherkennung aus einem großen Wortschatz (IBM, Dragon, AT&T, BBN, Caregie-MeLLon-Universität (CMU)/Pittsburgh; ÜbersichtsartikeL: Fallside F (1989) Progress in large vocabulary speech recognition. Speech Technology 4(4), 14-15) wenden vorwiegend Hidden-Markov-Modelle auf Phonembasis an. In keinem dieser Systeme ist eine automatische Wortschatz-Generierung bzw. -Erweiterung aus geschriebenem Text enthalten. Bei den Erkennern von IBM und Dragon müssen die Wörter isoliert gesprochen werden, während die Erkenner bei AT&T, BBN und CMU nicht sprecheradaptiv arbeiten.

Üblicherweise muß jedes Wort - im Falle einer sprecherabhängigen Erkennung - vom Benutzer ein- oder mehrmals ausgesprochen werden, darüber hinaus - im Fall der sprecherunabhängigen Erkennung - von einer sehr großen Anzahl von Sprechern (Größenordnung 100 bis 1000) mindestens je einmal. Ein solch aufwendiges Trainingsverfahren kann vermieden werden, wenn sprecheradaptive Verfahren verwendet werden. Mit zunehmendem Vokabularumfang ist es hinsichtlich einer echtzeitnahen Spracherkennung notwendig, schnell und ohne großen Rechenaufwand eine kurze Liste wahrscheinlich gesprochener "Wortkandidaten" zu erstellen. Aus diesem Untervokabular aus Wortkandidaten werden anschließend im Zuge der Feinanalyse die gesprochenen Wörter ermittelt. Eine solche Präselektion basiert auf der Klassifikation von groben Merkmalen in Wortuntereinheiten, z.B. in einzelnen Merkmalsvektoren, Phonemen oder Diphonen. Dies stellt für isoliert gesprochene Wörter - auch aus großen Vokabularen ebenso wie für Ziffernfolgen (vergleiche Chen FR (1986) Lexical access and verification in a broad phonetic approach to continuous digit recognition. IEEE ICASSP, 27.7.1-4; Lagger H, Waibel A (1985) A coarse phonetic knowledge source for template independent large vocabular word recognition. IEEE ICASSP (2), 23.6.1-4; Lubensky D, Feix W (1896) Fast feature-based preclassification of segments in continuous digit recognition. IEEE ICASSP, 21.6.1-4) ein praktikables Verfahren dar. Bei kontinuierlich gesprochener Sprache und größerem Wortschatz führt dies hingegen bereits bei mittleren Vokabulargrößen zu einer unüberschaubaren Hypothesenflut, da prinzipiell bei jeder dieser kleinen Einheiten ein neues Wort anfangen kann und bei jeder Einheit der gesamte Wortvorrat zu durchsuchen wäre. Eine zwei- oder dreidimensionale dynamische Programmierung ist aus Micca G, Pieraccini R, Laface P (1987) Three dimensional DP for phonetic lattice matching. Int Conf on Dig Signal Proc, Firence, Italy und Ruske G, Weigel W (1986) Dynamische Programmierung auf der Basis silbenorientierter Einheiten zur automatischen Erkennung gesprochener Sätze. NTG-Fachberichte 94,
Sprachkommunikation, 91-96 bekannt.

Bei den bekannten Verfahren sind die vorstehend genannten Anforderungen nicht vollständig und teilweise nicht ganz zufriedenstellend erfüllt.

Der Erfindung liegt die Aufgabe zugrunde, ein Verfahren zur sprecheradaptiven Erkennung von Sprache zu schaffen, das in der Lage ist, sowohl isolierte Wörter als auch kontinuierliche Sprache bei einem praktisch unbegrenzten Vokabular echtzeitnah zu erkennen und das auch die weiteren Anforderungen an ein leistungsfähiges Spracherkennungsverfahren erfüllt.

Diese Aufgabe wird erfindungsgemäß durch das Verfahren nach Patentanspruch 1 gelöst.

Weiterbildungen der Erfindung sind den Unteransprüchen zu entnehmen. Die Vorteile der Erfindung liegen insbesondere in der Robustheit der Wortmustererkennung bei fehlerhafter Silbensegmentierung und bei variabler Aussprache, z.B. beim Verschlucken von Silben. Große Referenzwortschätze brauchen nicht explizit vorgesprochen zu werden. Silbenorientierte Wortuntereinheiten ermöglichen im Vergleich zu den sonst gebräuchlichen Phonemen eine effizientere Generierung von Worthyphotesen.

Ein Ausführungsbeispiel der Erfindung wird im folgenden anhand der Zeichnung erläutert. Es zeigen:

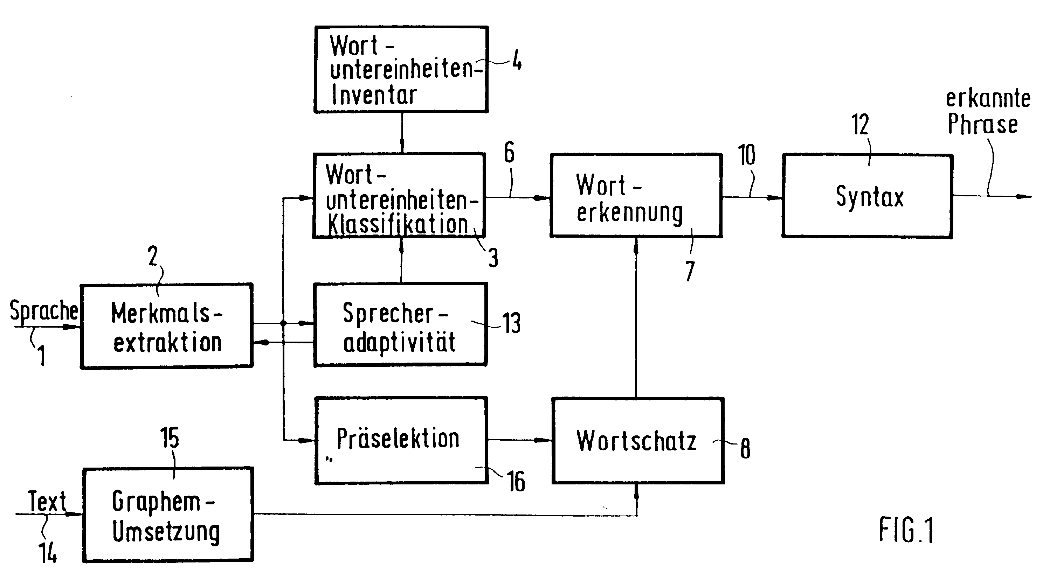

- Fig. 1: ein Funktionsdiagramm, das den modularen Aufbau des erfindungsgemäßen Verfahrens erkennen Läßt,
- Fig. 2: ein Diagramm zur Erläuterung des dreidimensionalen zeitdynamischen Vergleichs zur Worterkennung, und
- Fig. 3: ein Funktionsdiagramm zur Erläuterung der akustischen Präselektion eines Untervokabulars bei der Erkennung isolierter Wörter oder fließender Rede.

Bei einem zur erkennenden Sprachsignal 1 findet zunächst eine Extraktion 2 von Merkmalsvektoren statt. Ein solcher Merkmalsvektor wird z.B. aus Filterbank-Koeffizienten gebildet, die die Intensitäten für die verschiedenen Frequenzbereiche des Signals kennzeichnen. Anschließend wird eine automatische Segmentierung und Klassifikation 3 der aufeinanderfolgenden Merkmalsvektoren durchgeführt und zwar in silbenorientierte Wortuntereinheiten. Geeignete silbenorientierte Wortuntereinheiten sind z.B. CVC-Einheite (CVC für: consonant cluster - vocalic syllable kernel - consonant cluster), die aus einem vokalischen Silbenkern V mit vorausgehender silbeninitialer und nachfolgender silbenfinaler Konsonantenfolge oder einzelnen konsonantischen Phonemen C je Silbe bestehen. Die Segmentierung und Klassifikation 3 der Vektorfolgen wird anhand eines gespeicherten Vorrats an Wortuntereinheiten, im folgenden als Wortuntereinheiten-Inventar 4 bezeichnet, durchgeführt. Die Segmentierung und Klassifikation 3 der Vektorfolgen ergibt ein Hypothesennetz 6 (oder auch Netzwerk) aus Wortuntereinheiten, das einer Worterkennung 7 zugeführt wird.

Ein Wortschatz 8 enthält abgespeicherte Referenzmuster von Wörtern. In dem Verfahrensschritt Worterkennung 7 wird aus dem Hypothesennetz 6 aus Wortuntereinheiten unter Zugriff auf die abgespeicherten Referenzmuster ein Netz 10 von Worthypothesen regeneriert. Diese Worthypothesen werden sich bei kontinuierlicher Sprache im allgemeinen überlappen; aus ihnen wird in einem nachfolgenden Syntax-Schritt 12 die gesprochene Phrase oder der gesprochene Satz ermittelt.

In einem Verfahrenschritt Sprecheradaptivität 13 wird in einer kurzen Trainingsphase das Spracherkennungsverfahren an einen neuen Benutzer angepaßt, ohne daß dieser den gesamten Wortschatz vorsprechen muß. Dieser Verfahrensschritt wird als Hybridansatz durchgeführt, d.h. er wird sowohl auf die Ebene der Merkmalsvektoren als auch auf die Ebene der Wortuntereinheiten angewendet.

Der in dem Verfahren verwendete Wortschatz 8 wird durch die Eingabe von geschriebenem Text 14 erstellt und erweitert. Die Grapheme dieses Textes werden in einer Graphem-Umsetzung 15 automatisch in die hier verwendete Wortuntereinheiten-Notierung der Wörter umgewandelt. Die gleichfalls erzeugten Aussprachevarianten werden ebenfalls in diese Wortuntereinheiten-Notierung umgesetzt.

Um das Suchen in großen Wortschätzen zu beschleunigen, ist eine Präselektion 16 vorgesehen, mit deren Hilfe lediglich ein ausgewähltes Untervokabular auf Ähnlichkeit mit der gesprochenen Äußerung untersucht wird.

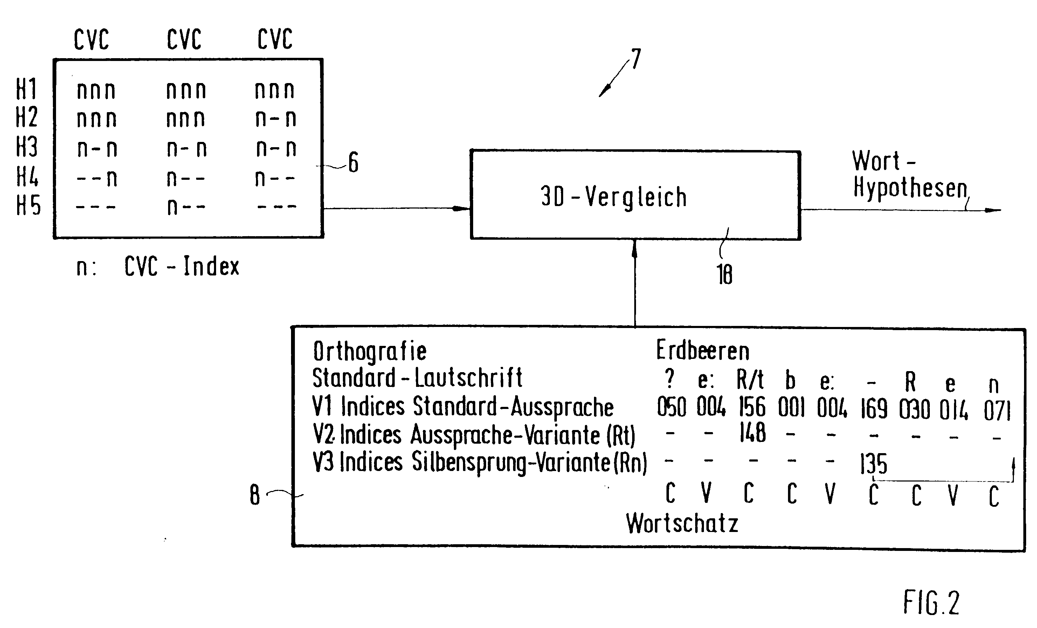

Die Verfahrensschritte oder Module Worterkennung 7 und Wortschatz 8 werden nun anhand von Fig. 2 eingehender erläutert. Die Worterkennung 7 wird durchgeführt, indem das Hypothesennetz 6 aus Wortuntereinheiten des Testmusters mit den Referenzmustern im Wortschatz 8 verglichen werden. In diesen Referenzmustern oder Wortmodellen sind neben der Standardaussprache des jeweiligen Wortes auch Aussprachevarianten, und zwar lineare Varianten einzelner Wortuntereinheiten oder Varianten mit Silbenauslassungen, integriert. In dem Wortschatz 8 (Fig. 2) ist dies beispielshaft anhand des Wort es "Erdbeeren" dargestellt: Die Standardaussprache V1 als dreisilbiges Wort, eine (lineare) Variante V2 an einer Stelle, sowie eine Silbensprung-Variante V3.

Sowohl als Referenzmuster aus dem Wortschatz 8 wie auch als Testmuster liegt je ein Wortuntereinheiten-Netz vor. Zur Worterkennung muß deshalb ein dreidimensionaler zeitdynamischer Vergleich 18 durchgeführt werden, bei dem zwei Dimensionen durch die zeitliche Entwicklung von Test- und Referenzmuster gegeben sind, während die dritte Dimension von den verschiedenen Hypothesen oder Aussprachevarianten pro Wortuntereinheit aufgespannt wird.

Es sind zwar schon Spracherkennungs-Verfahren mit dreidimensionalem Vergleich bekannt, sie verarbeiten aber höchstens zwei Alternativen pro Wortuntereinheit und beruhen insbesondere auf einer Segmentierung der Sprachsignale in Folgen von Phonemen. Dies hat eine ganz erhebliche Anzahl von möglichen Zuordnungen zur Folge. Die in dem erfindungsgemäßen Verfahren verwendeten silbenorientierten Wortuntereinheiten bieten dagegen den Vorteil, daß bei der zeitdynamischen Musteranpassung nur Einfügungen oder Auslassungen von ganzen Silben vorkommen können, z.B. von einem Vokal zur silbenfinalen Konsonantenfolge der nachfolgende Silbe (aus CVC/CVC wird CVC). Dies hat eine erhebliche Einschränkung der möglichen Zuordnungen im Vergeich zu den bekannten Verfahren zur Folge.

Um das Vokabular aus einem geschriebenen Text automatisch zu erstellen und zu erweitern, wird die Orthografie - auch Rechtschrift oder Graphemfolge eines neuen Wortes umgewandelt in eine Folge von indizes von silbenorientierten Wortuntereinheiten. Diese entsprechen den Indizes der Elemente des Inventars 4, das in der Worterkennung 7 als Referenz zur Klassifikation der akustischen oder gesprochenen Wortuntereinheiten verwendet wird. Die Referenz-Wortuntereinheiten werden in der Trainingsphase aus markierten Sprachdaten gewonnen, die alle vorkommenden Wortuntereinheiten enthalten. Ein Worteintrag in das Vokabular enthält demgemäß neben der Orthografie, Silbenzahl usw. solche Indexfolgen für die Standardaussprache und die Aussprachevarianten. Während der Worterkennung werden diese Indexfolgen mit dem Hypothesennetz aus Wortuntereinheiten - die ebenfalls in Indexform vorliegen - verglichen (Fig. 2). Entscheidend ist hier die Kompatibilität zwischen der Verarbeitung des Sprachsignals zu Wortuntereinheiten und der damit übereinstimmenden Analyse des geschriebenen Textes.

Um sowohl der hohen Variabilität der Aussprache eines einzelnen Benutzers und erst recht der Aussprache verschiedener Benutzer Rechnung zu tragen, ist es im Hinblick auf eine zuverlässige Spracherkennung außerdem vorteilhaft, Aussprachevarianten zu berücksichtigen. Bei umfangreichen Wortschätzen ist nur die automatische Generierung solcher Aussprachevarianten mit Hilfe phonologischer Regeln praktikabel.

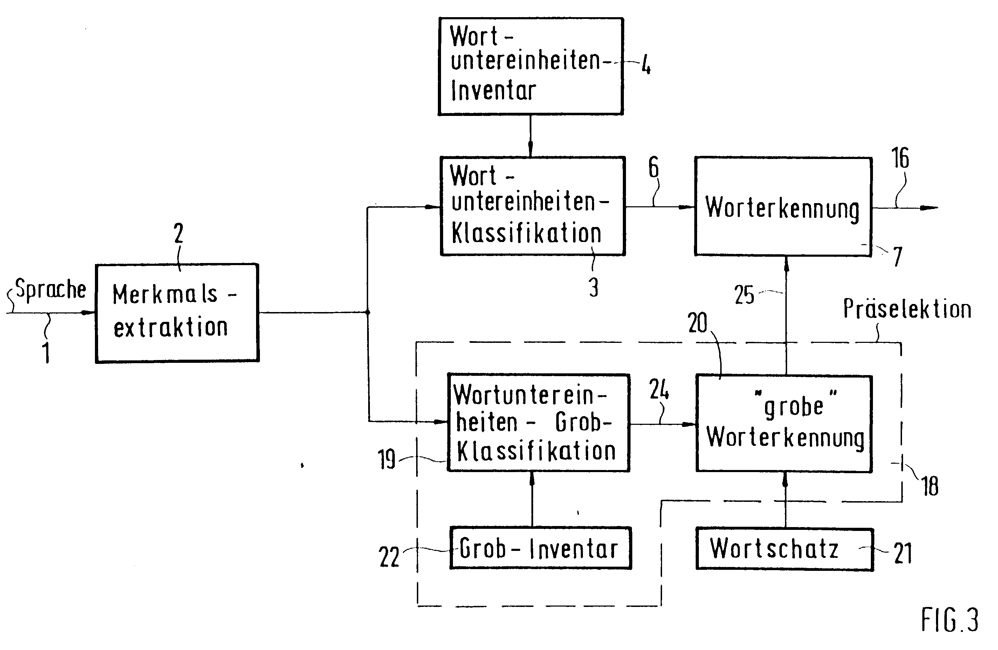

Um den Suchvorgang in umfangreichen Wortschätzen zu beschleunigen, wird eine Präselektion 18 (Fig. 3) angewendet, mit deren Hilfe lediglich ein ausgewähltes Untervokabular auf Ähnlichkeit mit der gesprochenen Äußerung untersucht wird. Die Präselektion beruht auf einer Klassifikation 19 nach "groben" silbenorientierten Wortuntereinheiten und einer "groben" und robusten Suche (Worterkennung) 20 in einem Wortschatz 21, der entsprechend "grob" kodierte Einträge enthält. Das Referenzmaterial zu der Identifikation der groben Wortuntereinheiten, ein sogenanntes Grob-Inventar 22, wird aus dem alle Wortuntereinheiten umfassenden Inventar 4 durch Klassenbildung generiert, die getrennt je nach Typ der Wortuntereinheit erfolgt, z.B. jeweils Vokale, silbeninitiale oder -finale Konsonatenfolgen.

Dabei werden akustisch ähnliche Wortuntereinheiten in sogenannten Clustern zusammengefaßt. Dies kann z.B. wahlweise durch eine akustische Beurteilung, durch eine Ermittlung disjunkter Untermengen auf der Basis von Ähnlichkeits- oder Verwechslungsmatrizen und/oder mit Hilfe bekannter Clusteringverfahren erfolgen.

Das Zwischenergebnis nach der Grob-Klassifikation entsprechend dem groben Referenzinventar besteht also aus einer Folge 24 aus groben Wortuntereinheiten. Aus dieser Folge 24 ermittelt das Modul zur groben Worterkennung 20 ein Untervokabular 25 mit den bestpassenden Wortkancidaten. Deren Wortmodelle, d.h. deren Wortuntereinheiten-Notierungen für die Standardaussprache und die Aussprachevarianten werden in der Worterkennung 7 zum Vergleich mit dem Hypothesennetz 6 herangezogen und nochmals eine Auswahl 16 getroffen.

Die beschriebene Präselektion eignet sich im Gegensatz zu allen bisher bekannten Methoden sowohl zur schnellen Vorauswahl eines Untervokabulars bei der Erkennung von Einzelwörtern als auch von verbundener Sprache, da die Generierung von Wortkandidaten auf die Silbenanfänge reduziert ist und somit eine überschaubare Hypothesenmenge erzeugt.

## Patentansprüche

1. Verfahren zur sprecheradaptiven Erkennung von Sprache (1),
- bei dem aus dem zu erkennenden Sprachsignal Merkmalsvektoren extrahiert werden (2),
- bei dem die aufeinanderfolgenden, extrahierten Merkmalsvektoren in silbenorientierte Wortuntereinheiten segmentiert und klassifiziert werden,
**dadurch gekennzeichnet,** daß
- die Segmentierung und Klassifizierung anhand von einem Wortuntereinheiten-Inventar (4) durchgeführt wird, und sich daraus ein Hypothesennetz (6) aus Wortuntereinheiten ergibt, und
- Hypothesennetz (6) aus Wortuntereinheiten sowohl für ein Testmuster als auch für ein Referenzmuster aus einem Wortschatz (8) vorliegen, wobei das Referenzmuster neben Standardaussprache auch Aussprachevarianten einzelner Wortuntereinheiten integriert, und
- ein dreidimensionaler zeitdynamischer Vergleich (18) mit Hilfe der Aussprachevarianten im Hypothesennetz aus Wortuntereinheiten für das Referenzmuster in einem Wortschatz (8) durchgeführt wird, und ein Worthypothesensatz erzeugt wird, und
- der Worthypothesensatz einer syntaktischen Analyse zur Ermittlung der gesprochenen Phrase unterworfen wird.

2. Verfahren nach Anspruch 1, dadurch gekennzeichnet, daß bei fließender Rede sich überlappende Worthypothesen einer syntaktischen Analyse (12) unterworfen und dadurch die gesprochene Phrase ermittelt wird.

3. Verfahren nach Anspruch 1, dadurch gekennzeichnet, daß die abgespeicherten Referenz-Sprachdaten mit einem Hybridensatz anhand der in einer kurzen Trainingsphase gesprochenen Äußerungen eines neuen Sprechers an diesen Sprecher adaptiert (13) werden.

4. Verfahren nach Anspruch 3, dadurch gekennzeichnet, daß sowohl die Merkmalsvektoren als auch die Wortuntereinheiten adaptiert werden.

5. Verfahren nach Anspruch 1, dadurch gekennzeichnet, daß der abgespeicherte Wortschatz einschließlich Aussprachevarianten durch Eingeben von geschriebenem Text (14) und regelbasiertes Umsetzen dieses Textes in Symbole für Wortuntereinheiten generiert und erweitert wird (15).

6. Verfahren nach Anspruch 1, dadurch gekennzeichnet, daß zum beschleunigten Erkennen von Sprache bei großen gespeicherten Wortschätzen eine Präselektion (16) eines Untervokabulars mit Hilfe von silbenorientierten Wortuntereinheiten durchgeführt wird.

## Claims

1. A process for speaker-adaptive recognition of speech (1)
- wherein feature vectors are extracted (2) from the speech signal to be recognised,
- wherein the consecutive, extracted feature vectors are segmented and classified in syllable-oriented word sub-units,
characterised in that
- the segmentation and classification are carried out on the basis of a word sub-unit inventory (4) and from the latter a hypothesis lattice (6) of word sub-units is formed and
- hypothesis lattices (6) of word sub-units are provided both for a test pattern and for a reference pattern from a vocabulary (8), where the reference pattern integrates not only standard pronunciation but also pronunciation variants of individual word sub-units and
- a three-dimensional time-dynamic comparison (18) is carried out with the aid of the pronunciation variants in the hypothesis lattice of word sub-units for the reference pattern in a vocabulary (8), and a word hypothesis sentence is generated and
- the word hypothesis sentence *is* subjected to syntactical analysis for the determination of the spoken phrase.

2. A process as claimed in Claim 1, characterised in that in the case of continuous speech, overlapping word hypotheses are subjected to a syntactical analysis (12) and the spoken phrase is thus determined.

3. A process as claimed in Claim 1, characterised in that with a hybrid calculation and with reference to the expressions of a new speaker spoken in a short training phase, the stored reference speech data are adapted to this speaker (13).

4. A process as claimed in Claim 3, characterised in that both the feature vectors and also the word sub-units are adapted.

5. A process as claimed in Claim 1, characterised in that the stored vocabulary including pronunciation variants is generated and expanded (is) by the input of written text (14) and rule-based conversion of this text into symbols for word sub-units.

6. A process as claimed in Claim 1, characterised in that for the accelerated recognition of speech in the case of large stored vocabularies, a preselection (16) of a subvocabulary is carried out with the aid of syllable-oriented word sub-units.

## Revendications

1. Procédé de reconnaissance de la parole adapté au locuteur (1),
- dans lequel des vecteurs indiciels sont extraits du signal vocal identifié (2),
- dans lequel les vecteurs indiciels extraits successivement sont classés et segmentés en sous-unités lexicales orientées syllabes,
caractérisé en ce que
- la segmentation et la classification sont exécutées à partir d'un inventaire de sous-unités lexicales (4), d'où il résulte un réseau d'hypothèses (6) de sous-unités lexicales, et
- un réseau d'hypothèses (6) de sous-unités lexicales existe, non seulement pour un échantillon type, mais également pour un échantillon de référence provenant d'un vocabulaire (8), ce qui fait que l'échantillon de référence intègre également, outre une prononciation standard, des variantes de prononciation de sous-unités lexicales isolées, et
- une comparaison dynamique tridimensionnelle (18) est réalisée au moyen des variantes de prononciation dans le réseau d'hypothèses de sous-unités lexicales pour l'échantillon de référence dans un vocabulaire (8), et une séquence d'hypothèses de mots est engendrée, et
- la séquence d'hypothèses de mots est soumise à une analyse syntaxique pour rechercher la phrase prononcée.

2. Procédé selon la revendication 1, caractérisé en ce que, dans un flot de paroles continu, des hypothèses de mots se chevauchant sont soumises à une analyse syntaxique (12) et que la phrase prononcée est ainsi recherchée.

3. Procédé selon la revendication 1, caractérisé en ce que les données vocales de référence mémorisées avec une séquence hybride formée à partir des paroles prononcées par un nouveau locuteur lors d'une courte phase d'apprentissage sont adaptées à ce nouveau locuteur (13).

4. Procédé selon la revendication 3, caractérisé en ce que, sont adaptés aussi bien les vecteurs indiciels que les sous-unités lexicales.

5. Procédé selon la revendication 1, caractérisé en ce que le vocabulaire mémorisé, variantes de prononciation comprises, est généré et étendu pour des sous-unités lexicales par l'entrée de texte écrit (14) et la transposition selon les règles de ce texte en symboles.

6. Procédé selon la revendication 1, caractérisé en ce que pour accélérer la reconnaissance de la parole dans les vocabulaires étendus mémorisés, une présélection (16) d'un sous-vocabulaire est exécutée au moyen de sous-unités lexicales orientées syllabes.
